Europäisches Patentamt

European Patent Office

Office européen des brevets

(19)

(11) Veröffentlichungsnummer: **0 099 044**
A2

# (12) EUROPÄISCHE PATENTANMELDUNG

(21) Anmeldenummer: 83106529.7

(22) Anmeldetag: 05.07.83

(51) Int. Cl.³: **B 60 N 1/06**

(30) Priorität: 13.07.82 DE 3226149

(43) Veröffentlichungstag der Anmeldung:
25.01.84 Patentblatt 84/4

(84) Benannte Vertragsstaaten:
AT BE CH FR GB IT LI LU NL SE

(71) Anmelder: KEIPER RECARO GMBH & CO.
Büchelstrasse 54-58
D-5630 Remscheid 14(DE)

(72) Erfinder: Treiber, Horst
Eichenparkstrasse 7
D-7000 Stuttgart-Riedenberg(DE)

(72) Erfinder: Kappenmann, Roland
Siebenbürgenstrasse 9
D-7317 Wendlingen(DE)

(72) Erfinder: Horvath, Walter
Torweg 10
D-7311 Owen-Teck(DE)

(72) Erfinder: Nörrenberg-Sudhaus, Werner
Hermann-Kurz-Strasse 42
D-7312 Kirchheim-Teck(DE)

(72) Erfinder: Weinmann, Peter
Cranachweg 12
D-7312 Kirchheim-T.(DE)

(72) Erfinder: Matthaei, Gerhard
Stöckenbergweg 4
D-7300 Esslingen(DE)

(72) Erfinder: Tretter, Bernhard
Fasanenweg 18
D-7172 Rosengarten-Westheim(DE)

(74) Vertreter: Patentanwälte Phys. Bartels, Dipl.-Ing. Fink
Dipl.-Ing. Held
Lange Strasse 51
D-7000 Stuttgart 1(DE)

(54) Kopfstütze für Fahzeugsitze.

(57) Bei einer Kopfstütze für Fahrzeugsitze mit einem rahmenartigen Polsterträger (1) und einer diesen mit dem Sitz verbindenden Haltevorrichtung (16,17,18) ist der Polsterträger (1) aus einem vorderen und einem hinteren Teil (2 bzw. 3) zusammengesetzt.

EP 0 099 044 A2

./...

Fig. 2

0099044

9. Juni 1982
Reg.-Nr. 126 542
Ref.: 3320orr

**KEIPER RECARO GMBH & CO., 7312 Kirchheim/Teck (Baden-Württ.)**

---

### Kopfstütze für Fahrzeugsitze

---

Die Erfindung betrifft eine Kopfstütze für Fahrzeugsitze mit einem rahmenartigen Polsterträger und einer diesen mit dem Sitz verbindenden Haltevorrichtung.

Bei den bekannten Kopfstützen dieser Art ist über den Polsterträger ein schlauchartiges Netz gezogen, das den vom Polsterträger begrenzten Bereich vollständig überdeckt. Eine Polsterung deckt die Schenkel des Polsterträgers zumindest nach vorne, nach hinten und nach außen hin ab.

Für anders ausgebildete Kopfstützen sind diese Polsterträger nicht verwendbar. Dies gilt nicht nur für solche Kopfstützen, die mit einem oder mehreren Durchbrüchen versehen sind, welche nicht von einem Netz überdeckt sind, sondern auch für Kopfstützen, die frei von Durchbrüchen sind und deren Polsterung in der Art einer Haube den Polsterträger umgibt. Wenn, wie dies

0099044

in der Regel der Fall ist, das Produktionsprogramm unterschiedliche Kopfstützenmodelle umfaßt, dann werden allein schon durch die modellspezifischen Polsterträger die Herstellungskosten erheblich beeinflußt.

Der Erfindung liegt die Aufgabe zugrunde, eine Kopfstütze für Fahrzeugsitze zu schaffen, welche es ermöglicht, unterschiedliche Ausführungsformen kostengünstiger als bisher fertigen zu können. Diese Aufgabe löst eine Kopfstütze mit den Merkmalen des Anspruches 1.

Der erfindungsgemäße Polsterträger, welcher den Prallkörper bildet, der die auf die Polsterung einwirkenden Kräfte aufnimmt und in die Haltevorrichtung einleitet, ist nicht nur für eine Rahmenkopfstütze verwendbar, bei welcher jeder der den rahmenartigen Polsterträger bildenden Schenkel mit einer Polsterung umhüllt ist, sondern auch als Polsterträger für Netzkopfstützen und für vollgepolsterte Kopfstützen. Im letztgenannten Falle wird auf den Polsterträger eine haubenartige Polsterung aufgebracht, während im Falle einer Netzkopfstütze das Netz zwischen die beiden Teile des Polsterträgers eingeklemmt wird und die Schenkel des Polsterträgers mit einer Polsterung versehen werden, wie dies bei Netzkopfstützen üblich ist. Der erfindungsgemäße Polsterträger ist also universell verwendbar, wodurch sich die Herstellungskosten der Kopfstützen unabhängig davon, um welche Art von Kopfstützen es sich handelt, vermindern lassen.

Zwar sind Polsterträger bekannt, die aus einer vorderen und einer hinteren Schale aus Kunststoff bestehen. Diese Polsterträger bilden jedoch einen quaderartigen Hohlkörper. Daher sind sie nur für vollgepolsterte Kopfstützen verwendbar, also ebenfalls modellspezifisch ausgebildet.

Vorzugsweise liegt die Teilungsebene des Polsterträgers zumindest in einigen Bereichen in der Mittelebene des Polsterträgers, da dies zu konstruktiv einfachen Formen der beiden Teile führt. Ferner greift zumindest der eine Teil des Polsterträgers mit vorspringenden Materialpartien in korrespondierend ausgebildete Vertiefungen des anderen Teils ein, wodurch die Verbindung beider Teile besonders einfach wird. Vorzugsweise sind die vorspringenden Materialpartien und die korrespondierend ausgebildeten Vertiefungen dabei auf denjenigen Bereich der beiden Teile beschränkt, in dem der Polsterträger mit der Haltevorrichtung verbunden ist. Es bereitet dann keine Schwierigkeiten, beide Teile des Polsterträgers gleich auszubilden, wie dies bei einer bevorzugten Ausführungsform der Fall ist, um die Fertigungskosten und die Lagerhaltungskosten noch weiter zu vermindern.

Vorzugsweise bestehen beide Teile des Polsterträgers aus schwer entflammbarem Kunststoff. Die Verwendung von Kunststoff ist vor allem dann besonders vorteilhaft, wenn beide Teile des Polsterträgers gleich ausgebildet sind, also mittels ein und desselben Werkzeuges hergestellt werden können.

Zumindest dann, wenn die Haltevorrichtung zwei Tragstangen aufweist, ist es vorteilhaft, wenn die beiden Teile des Polsterträgers einen U-ähnlichen Körper bilden, dessen nach unten weisende Schenkel im Bereich ihrer freien Enden durch einen einstückig mit ihnen ausgebildeten Steg miteinander verbunden sind. Derartige Schenkel vereinfachen die Verbindung zwischen dem Polsterträger und der Haltevorrichtung. Beispielsweise können sie, wie dies bei einer bevorzugten Ausführungsform der Fall ist, für die Verbindung mit jeder Tragstange einen nach unten offenen, im Querschnitt polygonalen Kanal aufweisen, in welchen ein Verbindungskörper undrehbar und gegen eine ungewollte Verschiebung in Kanallängsrichtung gesichert eingreifen kann. Diese Kanäle sind zweckmäßigerweise in den vorspringenden Werkstoffpartien vorgesehen, so daß also diese Werkstoffpartien eine zweifache Funktion haben.

Im folgenden ist die Erfindung anhand von drei in der Zeichnung dargestellten Ausführungsbeispielen im einzelnen erläutert. Es zeigen:

Fig. 1   eine Ansicht der Innenseite des einen Polsterträgerteils eines ersten Ausführungsbeispiels und in

- 4 -

unvollständiger Darstellung die zugehörige Haltevorrichtung,

Fig. 2  einen Schnitt nach der Linie II-II der
Fig. 1,

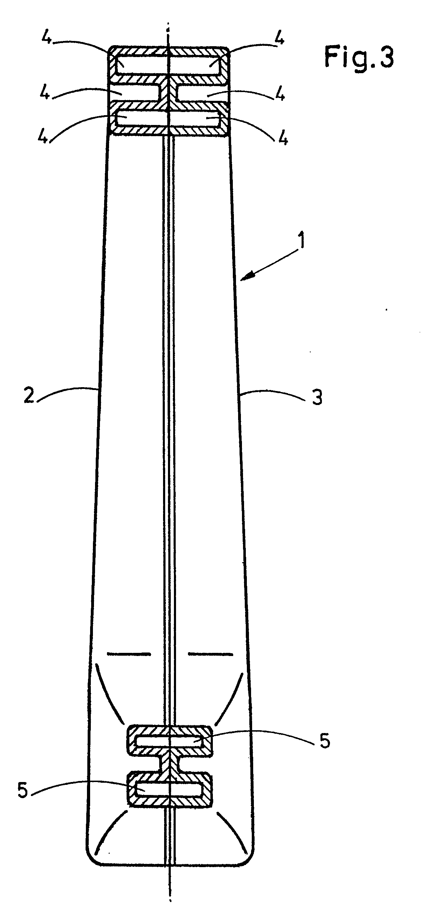

Fig. 3  einen Schnitt nach der Linie III-III der
Fig. 1,

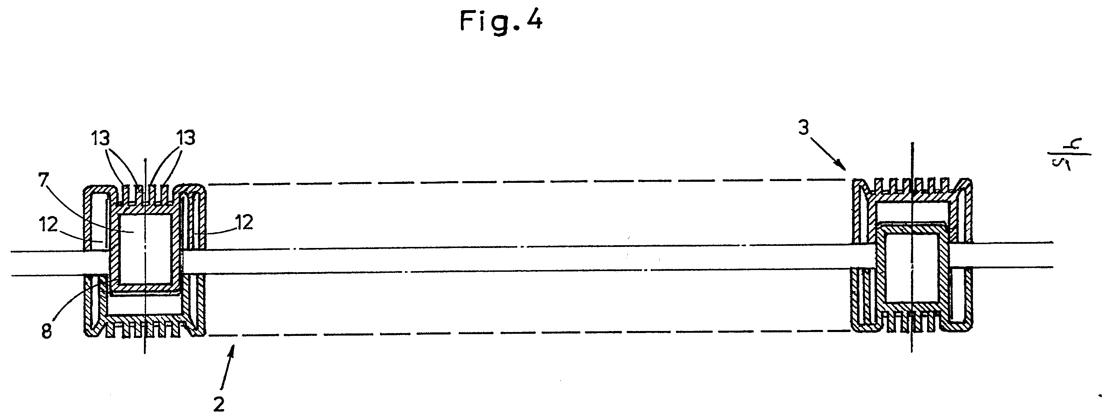

Fig. 4  einen Schnitt nach der Linie IV-IV der

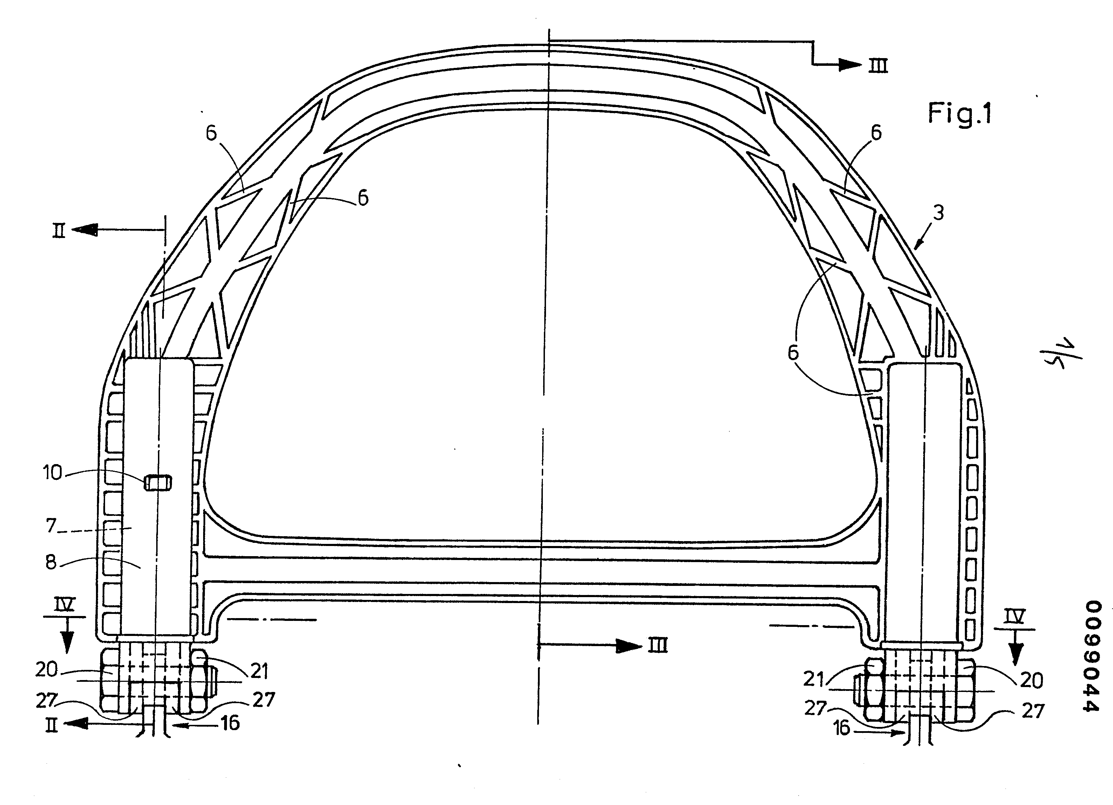

Fig. 1, wobei die beiden Teile auseinandergezogen dargestellt sind,

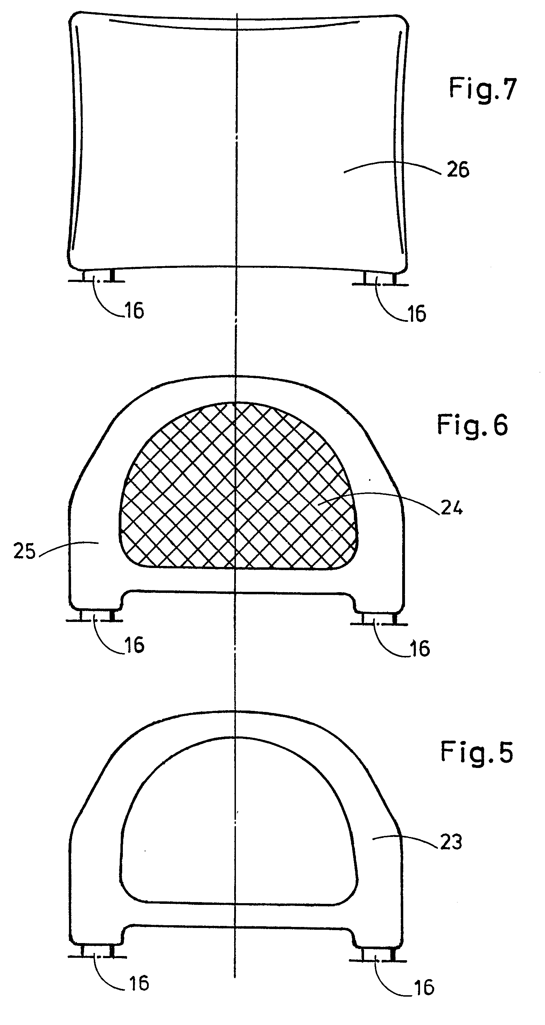

Fig. 5  eine Ansicht von vorne des ersten Ausführungsbeispiels,

Fig. 6  eine Ansicht von vorne eines zweiten
Ausführungsbeispiels,

Fig. 7  eine Ansicht von vorne eines dritten
Ausführungsbeispiels.

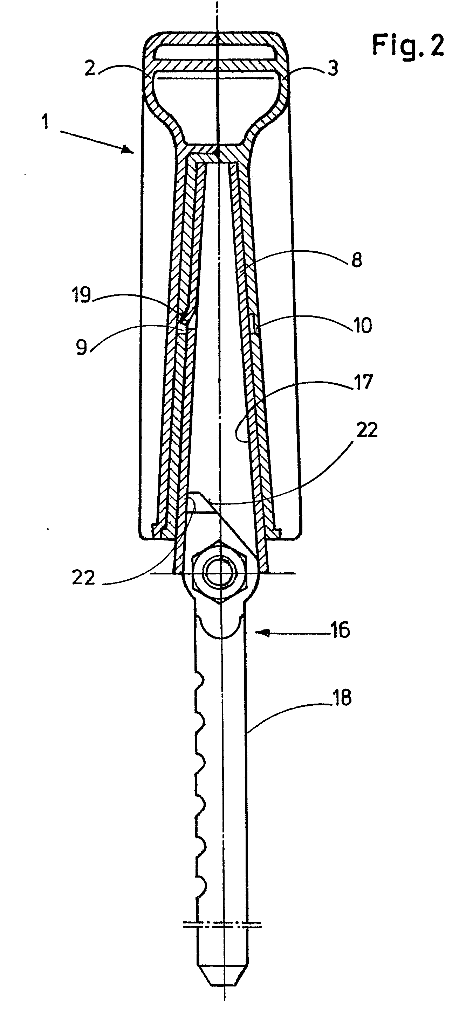

Eine Kopfstütze für einen Kraftfahrzeugsitz weist einen rahmenartigen Polsterträger 1 auf, der aus Polypropylen oder Polyamid,    also einem schwer entflammbaren Kunststoff, besteht.
Wie Fig. 1 zeigt, ist die Form des vom Polsterträger 1 gebildeten Rahmens mit einem U vergleichbar, dessen zueinander
parallele Schenkel mit ihrem freien Ende gegen die Rückenlehne
weisen und nahe ihrem freien Ende durch eine einstückig mit
ihnen ausgebildete Traverse miteinander verbunden sind. Der
Polsterträger 1 besteht, wie die Fig. 2 bis 4 zeigen, aus
einem vorderen, dem Kopf des Sitzbenutzers zugekehrten Teil 2
und einem hinteren Teil 3, die beide gleich ausgebildet sind,
also mittels des gleichen Spritzwerkzeuges hergestellt werden
können.

Der gekrümmte Abschnitt des vorderen Teils 2 und des hinteren
Teils 3, an den sich die beiden geradlinigen Schenkel anschließen, bildet drei in Längsrichtung dieses Abschnittes
verlaufende Nuten 4, von denen die mittlere zur Vorderseite
hin und die beiden äußeren zur Teilungsebene hin offen sind,
welche im Bereich dieses gekrümmten Abschnittes in der Mittelebene des Polsterträgers 1 liegt. Entsprechend ist, wie Fig. 3 zeigt, die Traverse ausgebildet, deren Nuten mit 5 bezeichnet sind. Auch hier liegt die Teilungsebene des Polsterträgers in seiner Mittelebene. Zusätzlich zu den Nuten 4 ist der gekrümmte Abschnitt durch Rippen 6 versteift.

Der in Fig. 1 links dargestellte Schenkel des hinteren Teils 3 bildet einen in seiner Längsrichtung verlaufenden und am freien Schenkelende offenen Kanal 7, welcher, wie Fig. 4 zeigt, einen rechteckförmigen Querschnitt hat und nach vorne von einer über die Teilungsebene vorspringenden Werkstoffpartie begrenzt ist, welche eine hohle, im Querschnitt rechteckförmige Leiste 8 bildet. Wie Fig. 2 zeigt, nimmt die Höhe des Kanals 7 und der Leiste 8 gleichmäßig gegen das freie Schenkelende zu, so daß sich der Kanal 7 gegen sein oberes, geschlossenes Ende hin keilartig verjüngt. In gleicher Höhe sind in der den Kanal 7 nach vorne begrenzenden Wand ein Durchbruch 9 und in der ihn nach hinten begrenzenden Wand eine Vertiefung 10 vorgesehen. Seitlich neben dem Kanal 7 weist der hintere Teil 3 außen und innen je eine zur Vorderseite hin offene und an der Teilungsebene endende Nut 12 auf, welche sich an die Nuten 4 anschliessen. Die hintere Begrenzungswand der Nuten 12 steht nach hinten über die hintere Begrenzungswand des Kanales 7 über. Die infolge dieses Überstandes vorhandene nutartige Vertiefung enthält in Längsrichtung des Kanals 7 verlaufende und an dessen hintere Begrenzungswand angeformte Versteifungsrippen 13, deren Höhe gleich der Tiefe dieser Vertiefung gewählt ist.

Die gleiche Ausbildung wie der in Fig. 1 rechts dargestellte Schenkel des hinteren Teils 3 hat der linke Schenkel des vorderen Teils 2, wie aus Fig. 4 ersichtlich ist.

Die Haltevorrichtung, welche den Polsterträger 1 um eine Querachse schwenkbar und relativ zur Rückenlehne höhenverstellbar mit der Rückenlehne verbindet, besteht aus zwei gleich ausgebildeten, als Ganzes mit 16 bezeichneten Tragstangen, die aus einem Stangenoberteil 17 und einem mit diesem gelenkig verbundenen Stangenunterteil 18 zusammengesetzt sind. Der Stangenoberteil 17 ist ein aus Blech hergestellter Hohlkörper, dessen äußeres Querschnittsprofil an das Querschnittsprofil des Kanals 7 angepaßt ist und dessen Länge etwas größer ist als die Länge des Kanals 7, so daß der mit dem Stangenunterteil 18 verbundene Endabschnitt außerhalb des Kanales 7 liegt, wenn der Stangenoberteil vollständig in den Kanal 7 eingesteckt ist und an dessen Innenwandung anliegt. In Höhe des Durchbruches 9 und der Vertiefung 10 ist aus dem den Stangenoberteil bildenden Blech eine Nase 19 ausgestellt, die beim Einstecken des Stangenoberteils 17 in den Kanal 7 in den Durchbruch 9 einrasten und dadurch verhindert, daß der Stangenoberteil 17, dessen freies Ende an der den Kanal 7 nach oben begrenzenden Wand Anschlag findet, wieder aus dem Kanal herausgezogen werden kann.

Der mit dem Stangenunterteil 18 verbundene Endabschnitt des Stangenoberteils 17 bildet ein Wangenpaar, das von einer Querbohrung durchdrungen wird. Diese Querbohrung nimmt eine Schraube 20 auf, auf die eine Mutter 21 aufgeschraubt ist. Wie Fig. 1 zeigt, durchdringt die Schraube 20 eine Querbohrung im oberen Endabschnitt des unteren Stangenteils 18, der durch einen Rundstab gebildet wird, welcher im Bereich der Querbohrung seitlich abgeflacht und entsprechend verbreitert ist. Das obere Ende des Stangenunterteils 18, das sich an die Abflachung anschließt, ist in Richtung der Längsachse der Schraube 20 verbreitert, um möglichst große Anschlagflächen 22 zu bilden. Die beiden Anschlagflächen 22 kommen nämlich in den beiden Endstellungen des Schwenkbereichs des Polsterträgers 1 an der vorderen bzw. hinteren Begrenzungswand des Stangenoberteils 17 zur Anlage und haben die Aufgabe, den Schwenkbereich zuverlässig auch bei hohen Kräften zu begrenzen.

Zwischen die abgeflachten Flächen und die ihnen benachbarten Wangen ist je eine Ringscheibe 27 eingelegt, welche von der Schraube 20 und der Mutter 21 an den Stangenunterteil 18 bzw. die Wangen des Stangenoberteils 17 angedrückt werden und das gewünschte Reibungsmoment ergeben, das notwendig ist, um die Kopfstütze in der gewünschten Schwenklage zu halten.

0099044

Der sich nach unten an den abgeflachten Abschnitt anschliessende Abschnitt des Stangenunterteils 18 ist in bekannter Weise mit Kerben versehen, in welche eine Rastfeder eingreift, um die Kopfstütze kraftschlüssig in der gewünschten Höheneinstellung zu halten.

Die Schenkel, welche der vordere Teil 2 und der mit ihm verklebte Teil 3 des Polsterträgers 1 bilden, sind, wie Fig. 5 zeigt, allseitig von einem Polster 23 umhüllt, aus dem nur die beiden Tragstangen 16 nach unten herausragen. Bei dem Polster 23 kann es sich beispielsweise um ein Integralschaum-Polster handeln. Das Polster braucht dann nicht mit einem Bezugsstoff überzogen zu sein.

Bei der in Fig. 6 dargestellten Ausführungsform sind der Polsterträger 1 und die Tragstangen 16 wie zuvor beschrieben ausgebildet. Der einzige Unterschied gegenüber dem Ausführungsbeispiel gemäß Fig. 5 besteht darin, daß zwischen den vorderen Teil 2 und den hinteren Teil 3 des Polsterträgers 1 ein Netz 24 in gespanntem Zustand gelegt und zwischen dem vorderen Teil und dem hinteren Teil eingeklemmt ist. Außerdem ist der Netzrand zusammen mit einer Halteleiste in die Nuten 4, 5, 12 und 15 eingelegt, damit das Netz auch bei Vorbelastung sicher festgehalten wird. Ein Polster 25 aus Integralschaum deckt den Polsterträger allseitig ab.

Wie Fig. 7 zeigt, kann der Polsterträger 1 ohne Abänderung auch für Kopfstützen verwendet werden, deren Polster 26 die Form einer Haube hat, welche von oben her über den Polsterträger gezogen und dann längs ihrer Unterseite mit Ausnahme der für die Tragstangen 16 erforderlichen Schlitze geschlossen wird. Der Hohlraum des Polsters 26 ist an die Außenkontur des Polsterträgers 1 angepaßt. Sofern das Polster 26 nicht aus Integralschaum besteht, ist es mit einem Bezugsstoff überzogen.

-8/Ansprüche-

0099044

P a t e n t a n s p r ü c h e

1. Kopfstütze für Fahrzeugsitze mit einem rahmenartigen Polsterträger und einer diesen mit dem Sitz verbindenden Haltevorrichtung, <u>dadurch gekennzeichnet,</u> daß der Polsterträger (1) aus einem vorderen und einem hinteren Teil (2 bzw. 3) zusammengesetzt ist.

2. Kopfstütze nach Anspruch 1, dadurch gekennzeichnet, daß die Teilungsebene des Polsterträgers (1) zumindest in einigen Bereichen in der Mittelebene des Polsterträgers liegt.

3. Kopfstütze nach Anspruch 1 oder 2, dadurch gekennzeichnet, daß zumindest der eine Teil (2,3) des Polsterträgers (1) mit einer vorspringenden Materialpartie (8) in eine korrespondierend ausgebildete Vertiefung (14) des anderen Teils (3, 2) des Polsterträgers (1) eingreift.

4. Kopfstütze nach einem der Ansprüche 1 bis 3, dadurch gekennzeichnet, daß die beiden Teile (2,3) des Polsterträgers (1) gleich ausgebildet sind.

5. Kopfstütze nach einem der Ansprüche 1 bis 4, dadurch gekennzeichnet, daß die beiden Teile (2,3) des Polsterträgers (1) aus schwer entflammbarem Kunststoff bestehen.

6. Kopfstütze nach einem der Ansprüche 1 bis 5, dadurch gekennzeichnet, daß die beiden Teile (2,3) des Polsterträgers (1) einen U-ähnlichen Körper bilden, dessen nach unten weisende Schenkel im Bereich ihres freien Endes durch eine einstückig mit ihnen ausgebildete Traverse miteinander verbunden sind.

7. Kopfstütze nach einem der Ansprüche 1 bis 6, dadurch gekennzeichnet, daß der Polsterträger (1) wenigstens einen zumindest an seinem einen Ende offenen, im Querschnitt polygonalen Kanal (7) aufweist, in welchen ein Verbindungskörper (17) undrehbar und gegen eine ungewollte Verschiebung in Kanallängsrichtung gesichert eingreift.

8. Kopfstütze nach Anspruch 7, dadurch gekennzeichnet, daß der Polsterträger (1) zwei nach unten offene und zueinander parallele Kanäle (7) aufweist, die in dem einen bzw. anderen Schenkel des U-förmigen Abschnitts des Polsterträgers (1) vorgesehen sind und je einen Verbindungskörper (17) enthalten, mit dem um eine Querachse schwenkbar und in wählbarer Schwenkstellung feststellbar eine Stange (16) verbunden ist.

9. Kopfstütze nach Anspruch 7 oder 8, dadurch gekennzeichnet, daß jeder Kanal (7) in einer der vorspringenden Werkstoffpartien (8) vorgesehen ist.

10. Kopfstütze nach einem der Ansprüche 1 bis 9, dadurch gekennzeichnet, daß die den rahmenartigen Körper bildenden Schenkel des Polsterträgers (1) mit einem den vom Rahmen begrenzten Bereich freilassenden Polster (23; 25) umhüllt sind.

11. Kopfstütze nach Anspruch 10, dadurch gekennzeichnet, daß zwischen die beiden Teile (2,3) des Polsterträgers (1) ein den vom Rahmen begrenzten Bereich überdeckendes Netz (24) eingelegt ist.

12. Kopfstütze nach einem der Ansprüche 1 bis 9, dadurch gekennzeichnet, daß der Polsterträger (1) ein haubenartiges Polster (26) trägt.

- . -

Fig.1

1/5

0099044

Fig.2

0099044

Fig.3

# Fig.4

0099044

0099044

Fig.7

26

16          16

Fig.6

24

25

16          16

Fig.5

23

16          16